# EUROPEAN PATENT APPLICATION

(11) **EP 4 242 473 A1**
(43) Date of publication of application: **13.09.2023**
(21) Application number: 23154830.6
(22) Date of filing: 03.02.2023
(51) Int. Cl.: F16B 5/02, F16B 25/00, F16B 25/10, E04F 13/08, E06B 1/60

(54) **DRYWALL SCREW**

(30) Priority: 11.03.2022 EP 22161683
(71) Applicant: Illinois Tool Works Inc., Glenview IL 60025 (US)
(72) Inventor: MARASCO, Jean-Paul, Glenview Illinois, 60025 (US); COUVREUR, Jérôme, Glenview Illinois, 60025 (US)
(74) Representative: HGF

(57) **Abstract**

The present invention concerns a drywall screw (1) for a track-mounted drywall system, the drywall screw comprising a head (2) and a shank (3) joined to the head. According to the invention, the shank comprises:
• a first portion (31) extending from the head and comprising a first thread (131);
• a second portion (32) extending from the first portion and comprising a second thread (132), the first portion having a larger diameter than the second portion;
• a first self-drilling portion (81) defining a step between the first portion and the second portion.

## Description

This invention relates to a drywall screw, in particular a drywall screw for a track-mounted drywall system.

### BACKGROUND

A track-mounted drywall system comprises a series of metal tracks (also called channels) that are attached to the ceiling and floor to provide a frame structure for drywall panels. The tracks are also attached to each other, typically using self-drilling screws, to provide a rigid frame. The tracks typically have an L or T profile for attaching drywall panels to the tracks.

A track or channel can also be screwed to a metal upright (also called stud) thanks to a self-drilling screw, a metal upright being fixed to a wall or a panel to provide a rigid frame structure for drywall panels.

After installation of the tracks, drywall screws are used to attach the drywall panels to the tracks. The drywall screws pass through the drywall panels and are typically self-tapping for drilling through and attaching to the track. Known drywall screws have a bugle head having a tapered neck between the head and the threaded shank.

Screws used to attach tracks to each other or to a metal upright are different of screws used to attach a drywall panel to a track. Thus, the operator must have at least two types of different screws to assemble the full track-mounted drywall system.

The present invention aims to overcome this disadvantage.

### BRIEF SUMMARY OF THE DISCLOSURE

In accordance with the present disclosure a drywall screw is provided for a track-mounted drywall system, the drywall screw comprising a head and a shank joined to the head. The shank comprises:
- a first portion extending from the head and comprising a first thread;
- a second portion comprising a second thread, the first portion having a larger diameter than the second portion;
- a first self-drilling portion defining a step between the first portion and the second portion.

Thus, the first self-drilling portion allows to limit the torque to be applied by the user when the first thread with the larger diameter is screwed on a metal track or a drywall panel to be mounted on such a metal track, and therefore allows to avoid over-stressing.

In one embodiment, the head comprises a planar bearing surface from which the first thread extends.

In a further embodiment, the drywall screw has an axial direction defined by the shank, and the planar bearing surface is perpendicular to the axial direction.

In a further embodiment, the second portion comprises a second self-drilling portion, the second thread extending between the first self-drilling portion and the second self-drilling portion.

In a further embodiment, the first self-drilling portion has a first length inferior or equal to 5 mm.

In further embodiment, the second self-drilling portion has a second length inferior or equal to 7 mm.

In a further embodiment, the first thread has a first length inferior or equal to 6 mm.

In a further embodiment, the second thread has a second length inferior or equal to 10 mm.

In a further embodiment, the first self-drilling portion has a first diameter superior or equal to 5 mm.

In a further embodiment, the second self-drilling portion has a second diameter superior or equal to 2.5 mm.

In a further embodiment, the first portion has a diameter nearly identical to the first diameter of the first self-drilling portion.

In a further embodiment, the second portion has a diameter nearly identical to the second diameter of the second self-drilling portion.

In a further embodiment, the first thread has a different screw pitch compared to the second thread.

### BRIEF DESCRIPTION OF THE DRAWINGS

Embodiments of the invention are further described hereinafter with reference to the accompanying drawings, in which:
FIG. 1 is a perspective view of a drywall screw according to the present invention;
FIG. 2 is a sectional view of the drywall screw of FIG. 1;
FIG. 3 is a view of a drywall screw mounted in two configurations, a first configuration for an assembly of a metal track with a metal upright, and a second configuration for an assembly of a metal upright and a drywall panel;
FIG. 4 is a view of an assembly between a drywall panel and a metal upright;
FIG. 5 is a view of an assembly between a track and a metal upright;
FIG. 6 is a 3D view of the drywall screw of FIG.1.

### DETAILED DESCRIPTION

For the avoidance of doubt, all of the features described here also apply to any aspect of the invention. Within the scope of the present application, it is expressly provided that the various aspects, embodiments, examples and alternatives set out in the preceding paragraphs, in the claims and / or in the following description and drawings, and in particular the individual characteristics thereof, can be taken independently or in any combination. In other words, all of the embodiments and / or features of any embodiment can be combined in any way, unless these features are incompatible. For the avoidance of doubt, the terms "may", "and / or", "for example", "for example" and any other similar term used in this document should be interpreted as non-limiting, so that any characteristic so described does not necessarily have to be present. Indeed, any combination of optional characteristics is expressly envisaged without departing from the scope of the invention, whether or not they are expressly claimed. The applicant reserves the right to modify any originally filed claim or to file any new claim accordingly, including the right to modify any originally filed claim to depend on and / or incorporate any feature of any other claim although not originally claimed in this manner.

As detailed below, the invention provides a drywall screw that can be used for attaching a drywall panel to a track (also called channel, in particular floor or ceiling channel), or for attaching two tracks to each other or to attach one track to a metal upright (also called stud).

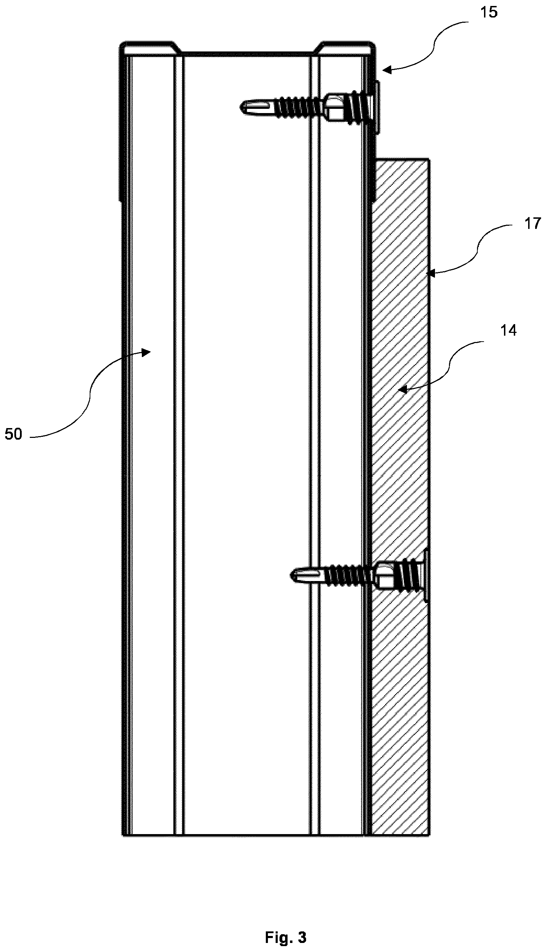

In the following description, the FIGS. 3 to 5 relates to a metal upright. But it can also be a metal track.

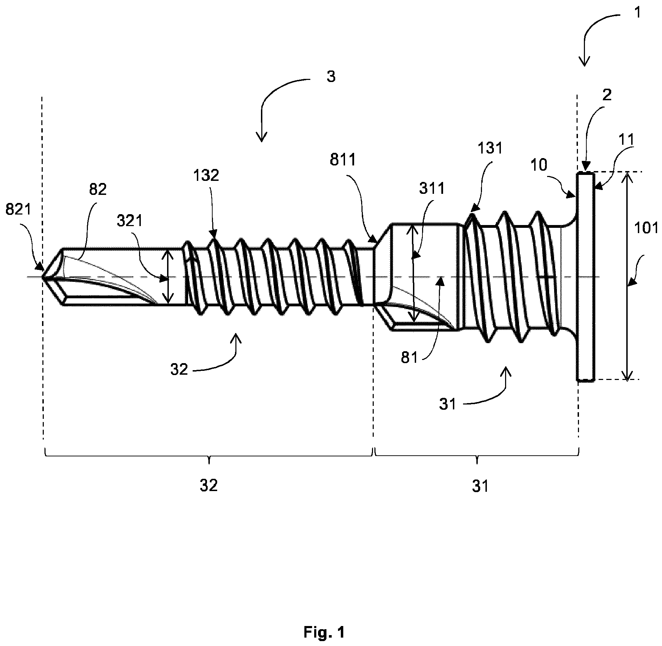

As shown in FIGS. 1 to 6, the drywall screw 1 includes a head 2 and a shank 3 extending from the head 2. The shank 3 is joined to the head 2 and comprises along its length 100:
- a first portion 31 extending from the head and comprising a first thread 131;
- a second portion 32 comprising a second thread 132, the first portion having a larger diameter than the second portion;
- a first self-drilling portion 81 defining a step between the first portion and the second portion.

Thus, the first self-drilling portion 81 allows to limit the torque to be applied by the user when the first thread 131 with the larger diameter is screwed on a metal track or a drywall panel to be mounted on such a metal track, and therefore allows to avoid over-stressing.

As explained further hereinafter, the first self-drilling portion 81 is preferably adapted to drill into metal, in particular steel.

Advantageously, the head 2 also comprises a planar bearing surface 10 from which the first thread 131 extends.

Also, the drywall screw 1 has an axial direction 9 defined by the shank 3, and the planar bearing surface 10 being perpendicular to the axial direction.

According to one embodiment, the drywall screw 1 also comprises a second self-drilling portion 82, the second thread 132 extending between the first self-drilling portion 81 and the second self-drilling portion 82.

Advantageously, the head 2 has a diameter 101 of 10 mm. Such diameter allows to get more contact surface against a track 5 or a drywall panel.

According to one embodiment, starting from the planar bearing surface 10, the shank comprises in the following order: the first thread 131, the first self-drilling portion 81, the second thread 132 and the second self-drilling portion 82.

The second self-drilling portion 82 allows to further limit the torque to be applied by the user when the first thread 131 with the larger diameter is screwed on a metal part (a metal track or a metal upright) or a drywall panel to be mounted on such a metal track, and therefore to avoid over-stressing on the assembly (metal track and/or metal upright and drywall panel) and also on the tool (a screwdriver for example).

The total length 100 of the shank, starting from the planar bearing surface 10, is for example 25.8mm, but not exclusively. Thus, the total length 100 comprises the first portion 31 and the second portion 32.

As introduced before, the head 2 includes a planar bearing surface 10. The bearing surface 10 is an underside of the head 2 that is in contact with the job part (for example a screwdriver) when the drywall screw 1 is used.

A top surface 11 of the head 2, opposite to the bearing surface 10, is also planar. Accordingly, the head 2 is in the form of a flat disc at the end of the shank 3.

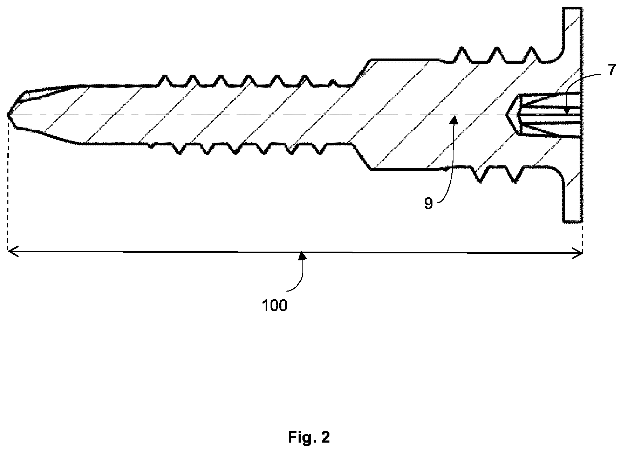

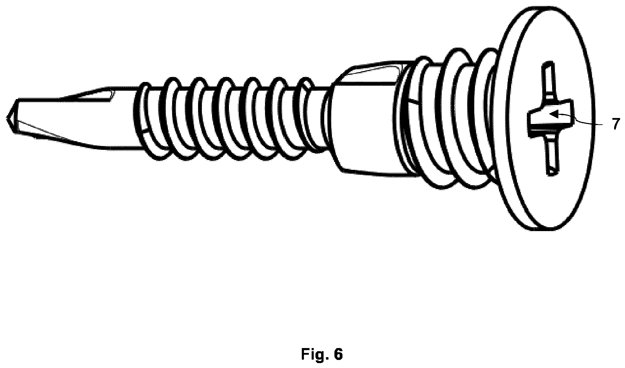

The top surface 11 of the head 2 includes a tool socket 7 (see FIGS 2 and 6). In this example, the tool socket 7 comprises a cross-head section for receiving a screwdriver. The cross-head tool socket 7 may be of the Philips type or other. In other examples, the tool socket 7 may comprise a slotted tool socket for receiving a flat screwdriver. In other examples, the tool socket 7 may comprise a combination tool socket (i.e., for receiving cross head or flat screwdrivers), a hexagonal or Allen socket, a square socket, a Torx socket, or any other socket type for driving tools such as screwdrivers.

The tool socket 7 extends through the head 2 and partially into the body of the first portion 31 of the shank 3 below. Accordingly, the head 2 can be made particularly thin as the tool socket 7 is accommodated in the first portion 31 of the shank 3. In addition, the first portion 31 of the shank 3 can accommodate a deeper tool socket 7 to improve reliability and reduce the risks of stripping the drywall screw 1.

The drywall screw 1 includes the second self-drilling portion 82 at the distal end of the second portion 32 of the shank 3. As explained further hereinafter, the second self-drilling portion 82 is preferably adapted to drill into metal, in particular steel.

As shown most clearly in FIG. 1, and as previously introduced, the drywall screw 1 has a longitudinal axis 9 defining an axial direction of the drywall screw 1. The planar bearing surface 10 of the head 2 is perpendicular to the longitudinal axis 9. The first portion 31 of the shank 3 is joined to the head 2 with minimal radius in between, so that an edge of the first portion 31 and the planar bearing surface 10 are nearly perpendicular and joined without any taper or radius therebetween. As explained further hereinafter, this allows the drywall screw 1 to be driven into a track or drywall board so that the head 2 is substantially flush with the track or drywall board.

As illustrated, the first thread 131 extends partially along the first portion 31. The first thread 131 extends from the planar bearing surface 10, or from a location immediately adjacent to the planar bearing surface 10.

In the example illustrated in FIG. 1, the drywall screw 1 has a length of about 26.6 mm taken from top surface 11 of the head 2 to a second extremity 821 of the second self-drilling portion 82. In other examples, the drywall screw 1 may have a length between about 20 mm and about 55 mm, for example of 35 mm.

In the example illustrated in FIG. 1 the first portion 31 of the shank 3 has a length of 9.8 mm, measured between the planar bearing surface 10 and a first extremity 811 of the first self-drilling portion 81.

In one embodiment, the second portion 32 of the shank 3 has a length of 16 mm starting from the first extremity 811 of the first self-drilling portion 81 to the second extremity 821 of the second self-drilling portion 82.

In one embodiment, the first and second threads 131, 132 are configured for drywall panels and metal tracks. In particular, the first and second threads 131, 132 have a thread angle of approximately 60 degrees. The first and second threads 131, 132 may comprise a twin thread. The height of the first and second threads 131, 132 may be between about 0.5 mm and 1 mm, depending on the size of the drywall screw 1.

The first portion 31 has a first outer diameter 311 larger than a second diameter 321 of the second portion 32. For example, the first diameter 311 is around 5 mm (± 0.2mm) and the second diameter is around 2.7 mm (± 0.2mm).

According to one embodiment, the first self-drilling portion 81 has a first length inferior or equal to 5 mm and the second self-drilling portion 82 has a second length inferior or equal to 7 mm.

The first thread 31 has a first length inferior or equal to 6 mm and the second thread 32 has a second length inferior or equal to 10 mm.

The first self-drilling portion 81 has a first diameter superior or equal to 5 mm and the second self-drilling portion 82 has a second diameter superior or equal to 2.5 mm.

The first portion 31 has a diameter nearly identical to the first diameter of the first self-drilling portion 81. The second portion 32 has a diameter nearly identical to the second diameter of the second self-drilling portion 82. For instance, the diameter of the first portion 31 is slightly smaller than the diameter of the first self-drilling portion 81 and the diameter of the second portion 32 is identical to the diameter of the second self-drilling portion 82. Of course, according to embodiments of the present invention, the diameter of the first portion 31 may be different (bigger of smaller) or identical from/to the diameter of the first self-drilling portion 81. Furthermore, according to embodiments of the present invention, the diameter of the second portion 32 may be different (bigger of smaller) or identical from/to the diameter of the second self-drilling portion 82.

According to one embodiment, the first thread 31 has a different screw pitch compared to the second thread 32.

FIG. 3 is view of a drywall screw 1 mounted in two configurations for illustration:
- at an upper part of FIG. 3, a first configuration for an assembly of a track 15 with a metal upright 50; and
- at a lower part of FIG. 3, a second configuration for an assembly of a metal upright 50 and a drywall panel 14.

As already introduced, a metal upright 50 can be replaced by a metal track 15, depending of where the operator needs to screw the drywall screw.

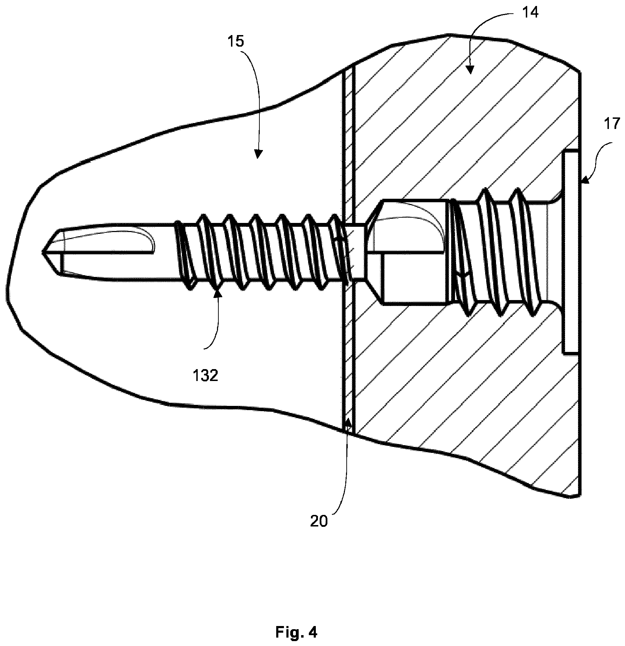

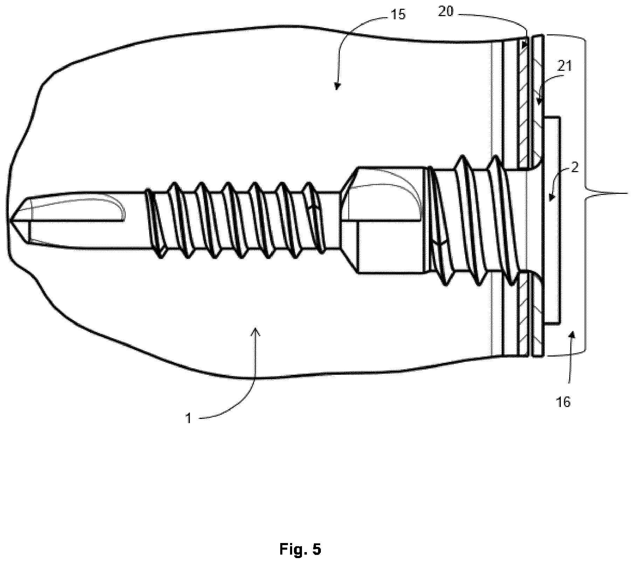

FIGS. 4 and 5, represent two sheet portions 20, 21 of two tracks 15 to be attached together (FIG 4) and the attachment between a track 15 and an drywall panel 14 (FIG 5).

FIG.4 illustrates the use of the drywall screw 1 to attach a drywall panel 14 to a track 15, in particular to a sheet portion 20 of the track 15. The track 15 is typically made of metal, such as steel. As shown, the drywall screw 1 has been screwed through the drywall panel 14 and the sheet portion 20 of the track 15. As a first step, the second self-drilling portion 82 cuts a path, particularly through the drywall panel 14 and the sheet portion 20 of the track 15. Then, the second thread 132 grips the sheet portion 20 and the first self-drilling portion 81 performs a drilling on the drywall panel 14. As shown on FIG. 4, at the end of screwing, the head 2, in particular the planar bearing surface 10, is in contact with an outer surface 17 of the drywall panel 14. In this configuration, the first portion 31 is accommodated in the drywall panel 1, the drywall panel 14 being strongly attached to the track 15 in this case. The second portion 32 of the shank 3 is attached to the sheet portion 20 of the track 15 thanks to the second thread 132 of the second portion 32. FIG. 5 illustrates use of the drywall screw 1 to attach a first track 15 to a second track 16. Such an attachment may be made when building a grid of tracks for later installation of drywall panels by the attachment illustrated in FIG. 4. The first and second tracks 15, 16 are made of metal, in particular steel.

As shown in FIG. 5, the drywall screw 1 has been screwed through a sheet portion 21 of the second track 16 and a sheet portion 20 of the first track 15. Firstly, the second self-drilling portion 82 cuts through the material of the sheet portions 20, 21. Next, during screwing, the second thread 132 drills the sheet portions 20, 21. Then, the first self-drilling portion 81 performs a new larger drilling on the sheet portions 20, 21 and to finish, the first thread 131 grips the first and second sheet portions 20, 21 to attach them to each other.

As shown, the first portion 31 of the shank 3 joins the first and second sheet portions 20, 21 together. The larger diameter of the first portion 31 provides an increased holding force and stronger attachment between the sheet portions 20, 21, and thus the first and second tracks 15, 16.

As shown, the head 2 is flush against the second sheet portion 21, such that the planar bearing surface 10 is flat against the second sheet portion 21. Accordingly, the head 2 does not protrude much above the surface of the second sheet portion 21, and a drywall panel 14 can be installed on the second drywall section 21 without the need to countersink or recess the drywall panel to take account of the head 2.

Accordingly, as illustrated in FIG. 5, the same drywall screw 1 can be used to attach together two tracks 15, 16 (i.e., a track-to-track attachment) or to attach a track 15 to a metal upright 50 (see FIG. 3) and also to attach a drywall panel 14 to a track 15 (i.e., a board-to-track attachment, see FIG. 4) or to attach a drywall panel 14 to a metal upright 50 (see FIG. 3). Accordingly, the installers need fewer types of fasteners when installing a drywall system. In addition, the flush head 2 (with planar bearing surface 10 and planar top surface 11) means that the installer does not have to recess or countersink fasteners to prevent problems with alignment. Accordingly, installation of a drywall system is faster and more convenient.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A drywall screw (1) for a track-mounted drywall system, the drywall screw comprising a head (2) and a shank (3) joined to the head, wherein the shank comprises:
• a first portion (31) extending from the head and comprising a first thread (131);
• a second portion (32) comprising a second thread (132), the first portion having a larger diameter than the second portion;
• a first self-drilling portion (81) defining a step between the first portion and the second portion.

2. A drywall screw (1) according to claim 1 wherein the head (2) comprises a planar bearing surface (10) from which the first thread (131) extends.

3. A drywall screw (1) according to claim 2 wherein said drywall screw (1) has an axial direction (9) defined by the shank (3), and the planar bearing surface (10) is perpendicular to the axial direction.

4. A drywall screw (1) according to any preceding claims wherein said drywall screw (1) comprises a second self-drilling portion (82), the second thread (132) extending between the first self-drilling portion (81) and the second self-drilling portion (82).

5. The drywall screw (1) according to any preceding claims, wherein the first self-drilling portion (81) has a first length inferior or equal to 5 mm and/or the second self-drilling portion (82) has a second length inferior or equal to 7 mm.

6. The drywall screw (1) according to any preceding claims, wherein the first thread (31) has a first length inferior or equal to 6 mm and/or the second thread (32) has a second length inferior or equal to 10 mm.

7. The drywall screw (1) according to any preceding claims, wherein the first self-drilling portion (81) has a first diameter superior or equal to 5 mm and/or the second self-drilling portion (82) has a second diameter superior or equal to 2.5 mm.

8. The drywall screw (1) according to claim 7, wherein :
• the first portion (31) has a diameter nearly identical to the first diameter of the first self-drilling portion (81); and/or
• the second portion (32) has a diameter nearly identical to the second diameter of the second self-drilling portion (82).

9. The drywall screw (1) according to any preceding claims, wherein the first thread (31) has a different screw pitch compared to the second thread (32).
